# EUROPEAN PATENT APPLICATION

(11) **EP 1 279 582 A1**
(43) Date of publication of application: **29.01.2003**
(21) Application number: 01202747.0
(22) Date of filing: 17.07.2001
(51) Int. Cl.: B62B 3/00, B62B 3/02

(54) **Method and trolley for servicing lodging rooms and the like**

(71) Applicant: JohnsonDiversey, Inc., Sturtevant, Wisconsin 53177-0902 (US)
(72) Inventor: Kirkpatrick, Nigel Robert, 9542 Munchwilen (CH); Windmeisser, Dieter, 9542 Munchwilen (CH)
(74) Representative: Ruschke, Hans Edvard, Dipl.-Ing.

(57) **Abstract**

The invention relates to a method of servicing lodging rooms (A) and the like, in which a trolley (1) is used containing materials for servicing. The trolley is driven to the room and parked there. The servicing person removes from the trolley (1) a smaller sub-trolley (8) containing the required servicing materials and is entering the room (A) with this sub-trolley. The trolley (1) comprises a frame (2), a chassis (3, 4) under the frame for moving the trolley, and supports (5, 6, 7) for supporting materials for servicing. A smaller sub-trolley (8) is removably connected to the trolley (1) and comprises supports (17, 18, 19) for at least the servicing materials required for one room.

## Description

The invention relates to a method of servicing lodging rooms and the like, wherein a trolley is used containing materials for servicing, which trolley is driven to the room and parked there while a servicing person is entering the room with the required servicing materials. It further relates to a trolley for use therewith, comprising a frame, a chassis under the frame for moving the trolley, and supports for supporting materials for servicing.

Such method and trolley are known, for example from GB-A-2 264 088.

The object of the present invention is to further improve the method and trolley mentioned in the preamble.

For this purpose, the method according to the invention is characterized in that the servicing person removes from the trolley a smaller sub-trolley containing the required servicing materials and is entering the room with this sub-trolley. The trolley according to the invention, which may be used with this method, is characterized by a smaller sub-trolley removably connected to the trolley and comprising supports for at least the servicing materials required for one room.

Due to the invention it is not necessary anymore for the servicing person to carry the servicing materials into the room and to walk into and out of the room several times to get and take back materials. Now it is possible to go into the room once, taking all required materials on the mobile sub-trolley, and take back the materials and any waste on the sub-trolley again to the main trolley which remained in the hallway or the like. The invention results in more efficiency, and therefore greater productivity of the servicing person and less work load and physical strain on this person.

An advantageous embodiment of the trolley according to the invention has the feature that the sub-trolley and trolley comprise co-operating hook and hook engaging means, wherein the hook means is preferably mounted to the trolley on a lifting mechanism, which is actuated by a lever mechanism.

In this manner the sub-trolley can easily be hooked to and unhooked from the trolley.

The invention will be further explained with reference to the drawing schematically showing an exemplary embodiment of the invention.
Fig. 1 is a schematic side view of a trolley and sub-trolley for servicing a lodging room or the like.
Fig. 2 illustrates the method for servicing a lodging room or the like using the trolley of fig. 1.

The exemplary embodiment of the trolley according to the invention is intended for use in a hotel for servicing hotel rooms thereof, but it should be kept in mind that the invention may also be used in hospitals, offices or other buildings. The service provided will be mainly cleaning, but the service may, for example, also be the distribution or collection of materials such as food, waste and the like.

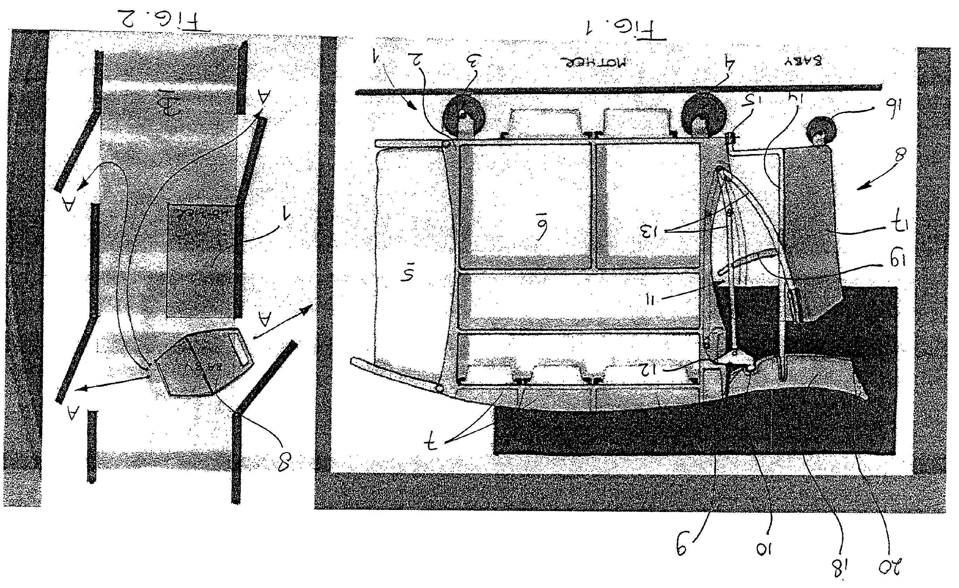

Fig. 1 shows a trolley 1 having a frame 2 and a chassis under the frame 2, in this case comprising two front wheels 3 and two rear wheels 4, which may be castor wheels. Attached to the frame 3 are all kinds of supports for supporting servicing materials, such as a basket 5 for dirty laundry, compartments 6 for clean laundry and the like and small trays and drawers 7 for bath room replenishments, such as soaps and the like, drinks for the minibar etc. Of course all kinds of other supports for other materials may be used.

As is shown in fig. 1, the trolley 1 is equipped with a smaller sub-trolley 8 which is removably connected to the rear side of the trolley 1, in this case through a hook 9 on trolley 1 engaging into a recess 10 in sub-trolley, such that the sub-trolley 8 is supported on the hook 9. The hook 9 is mounted to the trolley 1 through a lifting mechanism 11. In this case, the hook 9 is pivotable around a horizontal pivot 12 of the trolley 1 and the hook 9 is pivotable between a mounting position shown in solid lines in fig. 1 and a demounting position shown in dashed lines in fig. 1. The hook 9 is adjustable through a lever mechanism 13 including a handle which can be actuated by the servicing person. In this case it is very easy to hook the sub-trolley 8 to the trolley 1 by actuating the handle of the lever mechanism 13 while the sub-trolley 8 is standing behind the trolley 1.

The sub-trolley 8 comprises a frame 14 having a rest 15 on the lower side. Rest 15 is spaced from two wheels 16 the chassis of the sub-trolley. The sub-trolley 8 comprises supports for containing servicing materials, such as a wastebasket 17, an upper tray 18 and a shelf 19. Of course all kinds of other arrangements are conceivable.

In the embodiment shown, the upper tray 18 of the sub-trolley 18 is equipped with a steering handle 20 with which both the sub-trolley 8 and the combination of trolley 1 and sub-trolley 8 can be pushed/pulled and steered.

Fig. 2 illustrates the way in which the trolley 1 and sub-trolley 8 can be used in a method of servicing lodging rooms A. In this method, the trolley 1 and the sub-trolley 8 connected thereto are driven to the building, in this way the hallway B of a hotel. When the trolley 1 arrives at the room to be serviced, the trolley 1 is parked near the door of this room and then the sub-trolley 8 is disconnected from the trolley 1. Before or after disconnecting the sub-trolley 8, it is loaded with servicing materials which are necessary for servicing at least one room A. The sub-trolley 8 is then taken into the room A and the room is serviced, i.e. cleaned and/or made tidy. If other rooms A are nearby, the trolley 1 can remain in position and sub-trolley 8 can be taken directly to the next room. If necessary, materials can be exchanged between trolley 1 and sub-trolley 8 before entering the next room A.

From the foregoing description, it will be clear that the invention provides a trolley and method of servicing lodging rooms and the like which is efficient and which makes the work easier for the servicing personnel.
The invention is not limited to the embodiment shown in drawing and described herein before, which may be varied in different ways within the scope of the appended claims.

## Claims

1. Method of servicing lodging rooms (A) and the like, wherein a trolley (1) is used containing materials for servicing, which trolley is driven to the room and parked there while a servicing person is entering the room with the required servicing materials, **characterized in that** the servicing person removes from the trolley (1) a smaller sub-trolley (8) containing the required servicing materials and is entering the room (A) with this sub-trolley.

2. Trolley (1) for servicing lodging rooms (A) and the like, comprising a frame (2), a chassis (3, 4) under the frame for moving the trolley, and supports (5, 6, 7) for supporting materials for servicing, **characterized by** a smaller sub-trolley (8) removably connected to the trolley (1) and comprising supports (17, 18, 19) for at least the servicing materials required for one room.

3. Trolley according to claim 2, wherein the sub-trolley (8) and trolley (1) comprise co-operating hook and hook engaging means (9, 10).

4. Trolley according to claim 3, wherein the hook means (9) is mounted to the trolley (1) on a lifting mechanism (11), which is preferably actuated by a lever mechanism (13).

5. Trolley according to one of the preceding claims, wherein the sub-trolley (8) comprises a wastebasket (17), and a tray (18) for servicing materials.

6. Trolley according to one of the preceding claims, wherein the sub-trolley (8) comprises a chassis having two wheels (16) and a rest (15).

7. Trolley according to one of the preceding claims, wherein the trolley (1) has a front and rear side and the sub-trolley (8) is removably connected to the rear side.
